# FASCICULE DE BREVET EUROPEEN

(11) **EP 2 625 009 B1**
(45) Date de publication et mention de la délivrance du brevet: **02.11.2016**
(21) Numéro de dépôt: 11773785.8
(22) Date de dépôt: 27.09.2011
(51) Int. Cl.: B25J 15/00

(54) **ENSEMBLE DE MANIPULATION**
MANIPULATIONSANORDNUNG
MANIPULATION ASSEMBLY

(30) Priorité: 07.10.2010 FR 1058124
(43) Date de publication de la demande: 14.08.2013
(73) Titulaire: Peugeot Citroën Automobiles SA, 78140 Vélizy Villacoublay (FR)
(72) Inventeur: MARCEAU, Philippe, F-90380 Roppe (FR); MENEGON, Robert, F-25550 Bavans (FR); D ANDREAMATTEO, Alexandre, F-25200 Montbeliard (FR); FORTIN, Marc, F-25250 Appenans (FR); CHARDON, Eric, F-90000 Belfort (FR); LE GALL, Eric, F-25200 Montbeliard (FR); COOLS, Michel, F-25460 Etupes (FR); GALLINO, Romain, F-90800 Bavilliers (FR); FESSELET, Pascal, F-25200 Bethoncourt (FR); CORBAT, Raphael, F-70400 Chagey (FR)
(74) Mandataire: Rosenberg, Muriel Sylvie
(86) Numéro de dépôt international: PCT/FR2011/052243
(87) Numéro de publication internationale: WO 2012/045957

(56) Documents cités:
- EP-A1- 0 063 161
- EP-A1- 0 979 776
- EP-A1- 1 841 571
- JP-A- 4 063 642
- JP-A- 9 188 143
- US-A- 5 812 395

## Description

La présente invention se rapporte à un ensemble de manipulation, comprenant un élément à manipuler et un dispositif manipulateur.

La présente invention s'applique notamment au montage de pièces dans un véhicule automobile.

Un véhicule automobile comporte de nombreuses pièces mécaniques et/ou électroniques. Lors du montage dudit véhicule, il est classique de déplacer ces pièces au moyen d'automates munis de pinces, ces dernières saisissant la pièce pour la placer à un endroit approprié dudit véhicule. Un dispositif de ce type est notamment décrit dans le document JP9193860.

Cependant, certaines des pièces entrant dans la composition d'un véhicule peuvent nécessiter une manipulation particulièrement délicate, ce qui complique les opérations de montage.

Par exemples, certaines pièces doivent être manipulées sans être serrées par une pince, sous peine d'écraser des parties fonctionnelles ou de déformer des structures sensibles.

Il est possible d'éviter d'exercer une contrainte sur les pièces en les saisissant par le dessous. Un dispositif approprié est décrit dans le document KR20060092587. Cependant, les contraintes de montage peuvent interdire ce type de saisie, car le dispositif manipulateur ne dispose pas de l'espace nécessaire pour ensuite se dégager. Par ailleurs, le dégagement d'un dispositif maintenant une pièce par le dessous est susceptible de secouer ladite pièce préalablement positionnée dans le véhicule. Les chocs résultants peuvent endommager la pièce.

Le document EP-A-0 063 161, sur lequel repose le préambule de la revendication 1, divulgue un dispositif manipulateur sous la forme d'un bras de robot équipé d'une fourche pour saisir des palettes.

Il est également connu de saisir des pièces par le dessus, au moyen d'une ventouse. Cette solution technique évite les contraintes de serrage liées à l'utilisation d'une pince. Cependant, certaines pièces sont trop lourdes pour être ventousées et/ou ne disposent pas de surfaces planes appropriées à une saisie par ventouse.

Il existe donc un besoin d'un dispositif de manipulation de pièces entrant dans la fabrication d'un véhicule, sans risque d'endommagement desdites pièces et permettant de manipuler des éléments lourds.

La présente invention a pour objet de résoudre ce problème. Le principe de l'invention est de prévoir, sur les pièces à monter, des moyens d'assemblage coopérant avec des moyens de saisie d'un dispositif manipulateur.

Plus précisément, l'invention se rapporte à un ensemble de manipulation selon la revendication 1, comprenant : un élément à manipuler, s'étendant selon un axe sensiblement horizontal ; un dispositif manipulateur, équipé de moyens de saisie de l'élément à manipuler ; l'élément à manipuler étant équipé de moyens complémentaires d'assemblage, aptes à coopérer avec les moyens de saisie du dispositif manipulateur ; lesdits moyens de saisie et lesdits moyens complémentaires étant configurés de sorte qu'un assemblage et/ou un désassemblage desdits moyens s'effectuent par translation du dispositif manipulateur par rapport à l'élément à manipuler, selon l'axe sensiblement horizontal dudit élément.

Les moyens portés respectivement par l'élément à manipuler et par le dispositif manipulateur permettent ainsi un assemblage/désassemblage selon un procédé simple et rapide. Le poids de l'élément à manipuler contribue à assurer la cohésion de l'ensemble ainsi formé.

Les moyens de saisie du dispositif manipulateur comportent au moins deux doigts, les moyens complémentaires d'assemblage de l'élément à manipuler comportant des faces orientées vers le bas et de formes sensiblement complémentaires d'une forme d'une partie desdits doigts. Ainsi, le poids de l'élément à manipuler est transmis efficacement aux doigts, ce qui stabilise l'ensemble lors de son déplacement.

Selon les contraintes d'encombrement liées au montage, on peut placer de manière appropriée lesdits moyens sur l'élément à manipuler et le dispositif manipulateur. Par exemple, pour déposer un élément au fond d'une cavité d'axe vertical, on placera les moyens d'assemblage sur le dessus dudit élément.

Le dispositif manipulateur comporte des moyens de blocage en translation sensiblement horizontale dudit dispositif manipulateur par rapport à l'élément à manipuler. Ces moyens ont pour but d'éviter que l'élément à manipuler ne soit accidentellement libéré du dispositif manipulateur en cours de déplacement. On considère que les moyens de blocage sont activés lorsqu'ils contribuent à bloquer en translation le dispositif manipulateur et l'élément à manipuler, l'un par rapport à l'autre. Inversement, on considère que les moyens de blocage sont désactivés lorsqu'ils autorisent le désassemblage du dispositif manipulateur et de l'élément à manipuler.

De manière préférentielle, le dispositif manipulateur comporte des moyens de guidage en translation sensiblement horizontale dudit dispositif manipulateur par rapport à l'élément à manipuler. Ces moyens de guidage comportent préférentiellement des patins constitués d'un matériau déformable élastiquement. Ces moyens de guidage visent à éviter d'endommager l'élément à manipuler, au moment de l'assemblage avec le dispositif manipulateur ainsi qu'au cours de la manipulation.

Préférentiellement, les moyens de blocage comportent un bras articulé porté par le dispositif manipulateur. Dans une position dite fermée, le moyen de blocage est activé. Dans une position dite ouverte, le moyen de blocage est désactivé : il permet le désassemblage du dispositif manipulateur et de l'élément à manipuler.

Plus préférentiellement, les doigts sont aptes à s'insérer simultanément, par translation selon l'axe sensiblement horizontal de l'élément à manipuler, dans des orifices portés par ledit élément, un bord dudit orifice comportant une face orientée vers le bas et de forme sensiblement complémentaire d'une partie dudit doigt.

D'autres formes connues de l'état de la technique peuvent être données aux moyens de saisie du dispositif manipulateur et aux moyens complémentaires d'assemblage de l'élément à manipuler, sans sortir du cadre de l'invention.

L'invention a également pour objet un procédé de montage d'un véhicule selon la revendication 5, comportant les étapes suivantes :
- assemblage de moyens de saisie d'un dispositif manipulateur et de moyens complémentaires d'un élément à manipuler, ledit dispositif et ledit élément faisant partie d'un ensemble de manipulation comportant un élément à manipuler, s'étendant selon un axe sensiblement horizontal ; un dispositif manipulateur, équipé de moyens de saisie de l'élément à manipuler ; l'élément à manipuler étant équipé de moyens complémentaires d'assemblage, aptes à coopérer avec les moyens de saisie du dispositif manipulateur ; lesdits moyens de saisie et lesdits moyens complémentaires étant configurés de sorte qu'un assemblage et/ou un désassemblage desdits moyens s'effectuent par translation du dispositif manipulateur par rapport à l'élément à manipuler, selon l'axe sensiblement horizontal dudit élément, et les moyens de saisie du dispositif manipulateur comportant au moins deux doigts, les moyens complémentaires d'assemblage de l'élément à manipuler comportant des faces orientées vers le bas et de formes sensiblement complémentaires d'une forme d'une partie desdits doigts ;
- déplacement du dispositif manipulateur solidaire de l'élément à manipuler ;
- pose de l'élément à manipuler dans le véhicule par le dispositif manipulateur ;
- désassemblage des moyens de saisie du dispositif manipulateur et des moyens complémentaires de l'élément à manipuler.

Le procédé comprend en outre :
- une étape d'activation d'un moyen de blocage en translation horizontale du dispositif manipulateur par rapport à l'élément à manipuler ;
- une étape de désactivation dudit moyen de blocage.

L'invention sera mieux comprise à la lecture de la description qui suit et à l'examen des figures qui l'accompagnent. Celles-ci sont présentées à titre indicatif et nullement limitatif de l'invention. Les figures montrent :
- Figures 1a, 1b, 1c: vues en perspective d'un ensemble de manipulation selon un premier mode de réalisation de l'invention ;
- Figures 2a, 2b : vues en perspective d'un ensemble de manipulation selon un deuxième mode de réalisation de l'invention ;
- Figures 3a, 3b : vues en perspective d'un ensemble de manipulation selon un troisième mode de réalisation de l'invention.

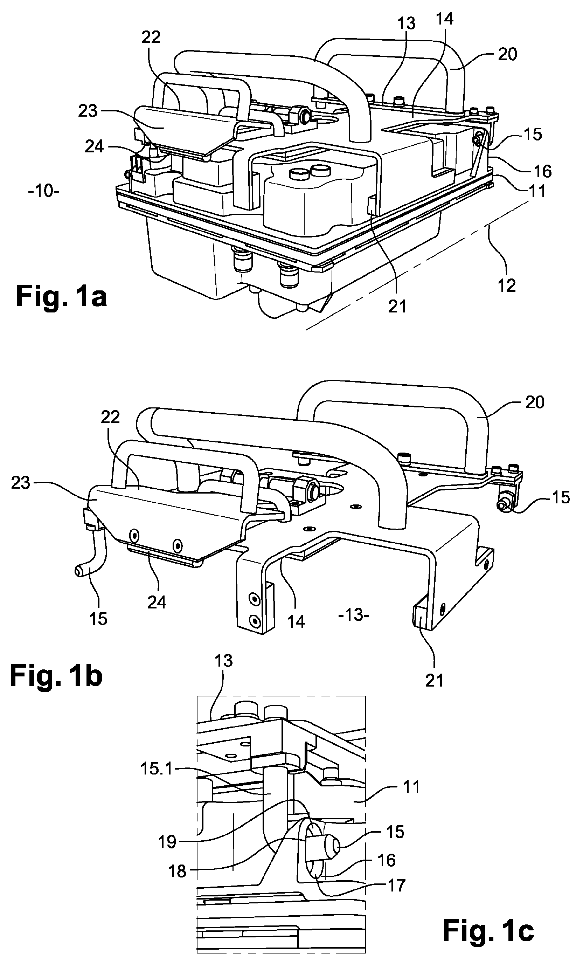

La figure 1a représente un ensemble de manipulation selon un premier mode de réalisation de l'invention. L'ensemble 10 comporte un élément 11 à manipuler. Dans l'exemple représenté à la figure 1a, il s'agit d'un onduleur destiné à être monté dans un véhicule automobile. Ce type d'élément nécessite d'être installé sans subir de contraintes de serrage, qui risquent d'en endommager des composants.

L'onduleur 11 s'étend selon un axe 12 sensiblement horizontal.

L'ensemble 10 comporte en outre un dispositif 13 manipulateur. La figure 1 a représente le dispositif 13 assemblé à l'onduleur 11. La figure 1 b représente le dispositif 13 manipulateur seul.

Le dispositif 13 manipulateur a pour fonction de saisir et de déplacer dans l'espace l'élément 11, ici un onduleur. Le dispositif 13 comporte notamment un cadre 14, qui porte des moyens 15 de saisie de l'élément 11.

Le cadre 14 a une forme sensiblement complémentaire d'une partie de l'onduleur 11. Dans le mode de réalisation représenté à la figure 1a, le cadre 14 vient au contact de parois supérieures et latérales dudit onduleur 11. Le dispositif 13 n'entre pas en contact avec le dessous de l'onduleur 11.

Dans l'exemple représenté aux figures 1a et 1b, les moyens 15 de saisie sont sous forme de doigts qui s'étendent sensiblement horizontalement, parallèlement à l'axe 12 de l'onduleur 11.

L'onduleur 11 comporte des plaques 16, disposées selon des plans verticaux sensiblement perpendiculaires à l'axe 12. Les plaques 16 sont reliées à des parois latérales de l'onduleur 11. Chaque plaque 16 est percée d'un orifice 17. Les plaques 16 et les orifices 17 constituent des moyens complémentaires d'assemblage aux moyens 15 de saisie du dispositif 13 de manipulation. Plus précisément, les plaques 16 et les orifices 17 sont disposés et configurés de sorte que les doigts 15 soient aptes à s'insérer simultanément, par translation du dispositif 13 selon l'axe 12, dans les orifices 17. Ainsi s'effectue l'assemblage de l'élément 11 et du dispositif 13 manipulateur.

La figure 1c montre une vue de détail d'un doigt 15 du dispositif 13, engagé dans un orifice 17 de l'onduleur 11. Lorsqu'on soulève le dispositif 13, le doigt 15 entre en contact avec un bord 18 supérieur de l'orifice 17. Le bord 18 comporte une face 19 orientée vers le bas et de forme sensiblement complémentaire d'une partie dudit doigt. Dans l'exemple représenté à la figure 1c, le doigt 15 a sensiblement la forme d'un cylindre de révolution, disposé horizontalement, et la face 19 est sensiblement concave. Selon une variante possible, la face 19 est plane et entre en contact avec une surface plane du doigt 15.

Plus la face 19 épouse la forme d'une partie supérieure du doigt 15, mieux le poids de l'onduleur 11 est transmis auxdits doigts 15. Cette transmission de force assure la stabilité de l'assemblage dispositif 13 / élément 11 lorsqu'on soulève ledit assemblage.

Préférentiellement, le doigt 15 est relié au cadre 14 par un élément 15.1 disposé sensiblement verticalement. Plus préférentiellement, l'élément 15.1 est disposé au-dessus du doigt 15. En effet, selon une forme préférentielle de l'invention, le dispositif 13 manipulateur assemblé à l'élément 11 à manipuler se trouve sensiblement au-dessus dudit élément 11.

Le dispositif 13 manipulateur peut être relié à un automate, notamment par l'intermédiaire de poignées 20 situées en partie supérieure du cadre 14. Ledit automate, par exemple dans une chaîne de montage de véhicules automobiles, peut soulever l'ensemble 10 formé par le dispositif 13 et l'onduleur 11. L'automate peut ensuite déplacer l'ensemble 10 afin de poser l'onduleur 11 à un emplacement approprié d'un véhicule en cours de montage. Suite à la pose de l'onduleur 11, le dispositif 13 est désassemblé dudit onduleur 11 par une translation selon l'axe 12, en sens opposé à la translation permettant l'assemblage dudit dispositif 13 et dudit onduleur 11. Un tel désassemblage est aisé et ne transmet pas de secousse à l'onduleur, contrairement au cas d'un dispositif manipulateur dont la prise se situerait au-dessous dudit onduleur.

Le dispositif 13 comporte deux doigts 15 de saisie de l'onduleur 11. Préférentiellement, les deux doigts 15 sont disposés de sorte qu'un centre de gravité de l'ensemble 10 tel que représenté à la figure 1a se trouve sensiblement dans un plan vertical passant par lesdits deux doigts 15. Cette disposition permet de stabiliser l'ensemble 10 lorsque le poids de l'onduleur 11 repose sur les doigts 15.

De manière préférentielle, le dispositif 13 manipulateur comporte des moyens 21 de guidage dudit dispositif 13, en translation selon l'axe 12 par rapport à l'onduleur 11. Dans l'exemple représenté aux figures 1a, 1b et 1c, ces moyens de guidage sont des patins 21 portés par le cadre 14. Ces patins sont constitués d'un matériau déformable élastiquement et apte à absorber les chocs, comme du feutre ou un matériau plastique souple. Les patins 21 guident la translation du dispositif 13 le long de l'onduleur 11, selon l'axe 12, lors de l'assemblage des doigts 15 avec les orifices 17. Lesdits patins 21 évitent que ledit assemblage n'engendre des chocs contre l'onduleur 11. Les patins 21 sont préférentiellement disposés selon des plans parallèles à l'axe 12.

Les patins 21 évitent également que des chocs ne soient transmis à l'onduleur 11 lors du déplacement de l'ensemble 10 par l'automate d'une chaîne de montage d'un véhicule.

De manière préférentielle, le dispositif 13 manipulateur comporte des moyens de blocage en translation selon l'axe 12, par rapport à l'onduleur 11. Plus précisément, lesdits moyens de blocage en translation ont pour fonction d'éviter un désassemblage accidentel du dispositif 13 et de l'onduleur 11, lorsque l'ensemble 10 est en cours de déplacement.

A cet effet, le dispositif 13 comporte un bras 22, de forme sensiblement coudée. Le bras 22 est monté mobile en rotation sur le cadre 14, selon un axe sensiblement perpendiculaire à l'axe 12. Lors d'une opération d'assemblage du dispositif 13 et de l'onduleur 11, le bras 22 est placé en position ouverte. Lorsque les doigts 15 sont positionnés dans les orifices 17, le bras 22 est rabattu en position fermée, de manière à entrer en contact avec l'onduleur 11. Ainsi, ledit onduleur 11 et le dispositif 13 manipulateur sont bloqués en translation l'un par rapport à l'autre selon l'axe 12, dans un sens qui tendrait à désassembler ledit onduleur 11 et ledit dispositif 13.

Un blocage en translation selon l'axe 12 dans un sens opposé peut notamment être assuré par les éléments 15.1 reliant les doigts 15 au cadre 14.

Lorsque l'onduleur 11 a été posé dans le véhicule à monter, le bras 22 est mis en position ouverte afin de permettre le désassemblage de l'ensemble 10.

Préférentiellement, une partie 23 du bras 22, destinée à entrer en contact avec l'onduleur 11, comporte un patin 24 déformable élastiquement et apte à absorber les chocs.

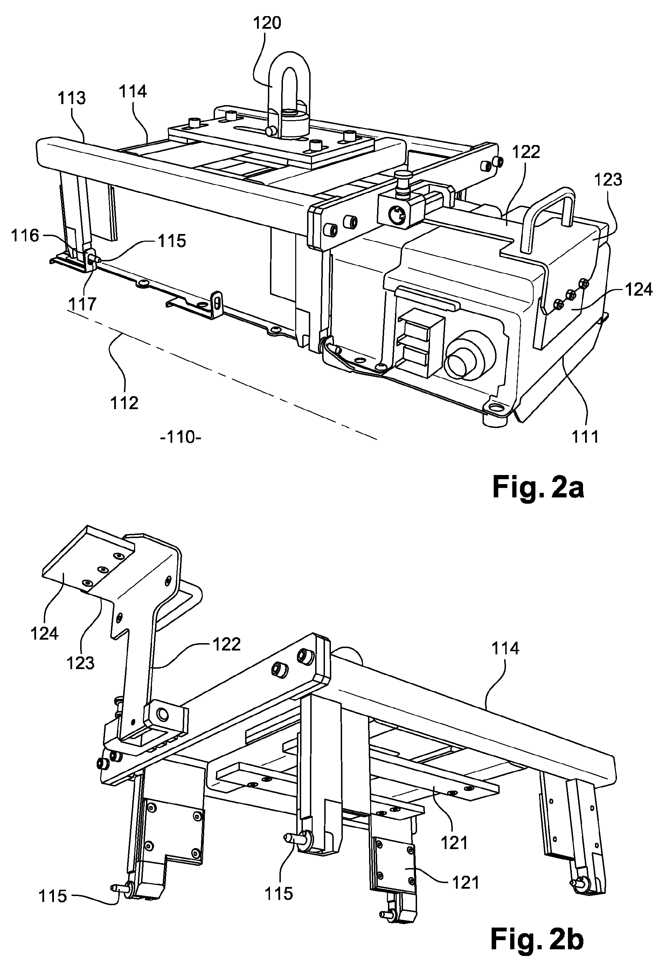

La figure 2a représente un ensemble de manipulation selon un deuxième mode de réalisation de l'invention. L'ensemble 110 comporte un élément 111 à manipuler, en l'occurrence une batterie destiné à être montée dans un véhicule automobile à motorisation hybride. La batterie 111 est de forme sensiblement parallélépipédique et s'étend selon un axe 112 sensiblement horizontal.

L'ensemble 110 comporte en outre un dispositif 113 manipulateur. La figure 2a représente le dispositif 113 assemblé à la batterie 111. La figure 2b représente le dispositif 113 manipulateur seul. Le dispositif 113 comporte notamment un cadre 114, de forme sensiblement complémentaire de la batterie 111. Le cadre 114 porte des moyens 115 de saisie de la batterie 111. Les moyens 115 de saisie sont sous forme de quatre doigts qui s'étendent sensiblement horizontalement, parallèlement à l'axe 112. Les doigts 115 sont sensiblement disposés aux sommets d'un rectangle sensiblement horizontal, tel qu'un centre de gravité de l'ensemble 110 soit situé sur un axe vertical passant par ledit rectangle. Cette disposition permet de stabiliser l'ensemble 110.

La batterie 111 comporte des plaques 116, disposées selon des plans verticaux sensiblement perpendiculaires à l'axe 112. Chaque plaque 116 est percée d'un orifice 117. Les plaques 116 et les orifices 117 sont disposés et configurés de sorte que les doigts 115 soient aptes à s'insérer simultanément, par translation du dispositif 113 selon l'axe 112, dans les orifices 117. Ainsi s'effectue l'assemblage de la batterie 111 et du dispositif 113.

Lorsqu'un automate soulève le dispositif 113, notamment par l'intermédiaire d'une poignée 120 portée par le cadre 114, le poids de la batterie 111 est transmis aux doigts 115 par l'intermédiaire d'un bord des orifices 117. Ce poids stabilise l'assemblage de la batterie 111 et du dispositif 113. L'automate peut alors déplacer l'ensemble 110 pour poser la batterie 111 dans un emplacement approprié d'un véhicule en cours de montage. Le dispositif 113 est ensuite désolidarisé de la batterie 111 par translation selon l'axe 112, en sens inverse du sens d'assemblage.

Comme dans le mode de réalisation représenté aux figures 1a et 1b, le dispositif 113 comporte des patins 121 de guidage pour l'étape d'assemblage avec la batterie 111. Ces patins, en matériau apte à absorber les chocs, sont placés selon des plans sensiblement parallèles à l'axe 112.

Comme dans le mode de réalisation représenté aux figures 1a et 1b, le dispositif 113 comporte un bras 122, de forme sensiblement coudée. Le bras 122 est monté mobile en rotation sur le cadre 114, selon un axe sensiblement orthogonal à l'axe 112. Lors d'une opération d'assemblage ou de désassemblage du dispositif 113 et de la batterie 111, le bras 122 est placé en position ouverte, comme il est visible sur la figure 2b. Lorsque les doigts 115 sont positionnés dans les orifices 117, le bras 122 est rabattu en position fermée, comme il est visible sur la figure 2a. Le bras 122 est alors en contact avec la batterie 111. Ainsi, ladite batterie 111 et le dispositif 113 manipulateur sont bloqués en translation l'un par rapport à l'autre selon l'axe 112, dans un sens qui tendrait à désassembler ladite batterie 111 et ledit dispositif 113. Un désassemblage accidentel est donc évité.

Comme dans le mode de réalisation représenté aux figures 1a et 1b, une partie 123 du bras 122 entre en contact avec la batterie 111 par l'intermédiaire d'un patin 124, apte à absorber les chocs.

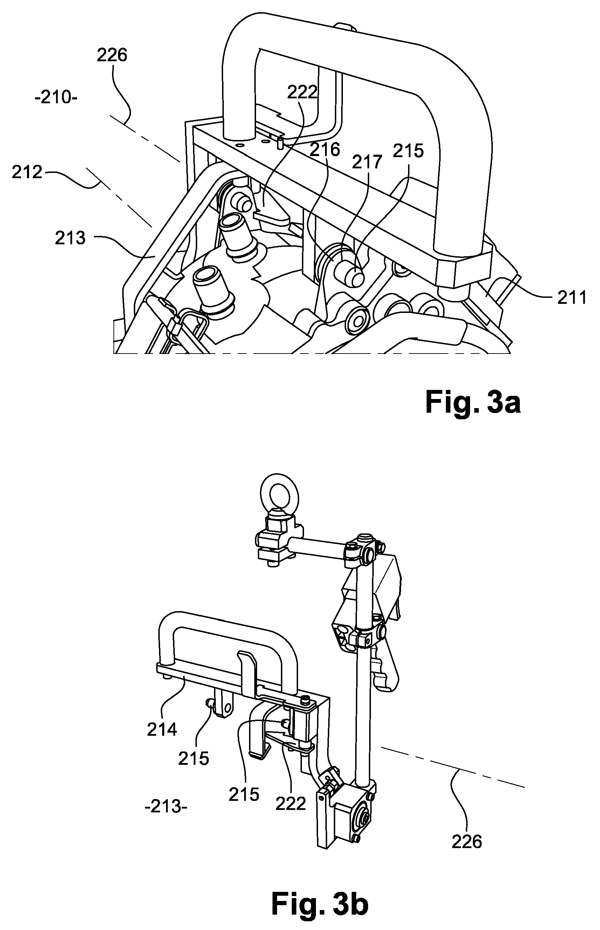

La figure 3a représente une vue de détail d'un ensemble de manipulation selon un troisième mode de réalisation de l'invention. L'ensemble 210 comporte un élément 211 à manipuler, en l'occurrence un alterno-démarreur. L'alterno-démarreur 211 s'étend selon un axe 212 sensiblement horizontal.

L'ensemble 210 comporte en outre un dispositif 213 manipulateur. La figure 3a représente le dispositif 213 assemblé à l'alterno-démarreur 211. La figure 3b représente le dispositif 213 manipulateur seul.

Le dispositif 213 manipulateur comporte notamment un cadre 214, de forme sensiblement complémentaire à celle de l'alterno-démarreur 211. Le cadre 214 porte des moyens 215 de saisie de l'élément 211. Les moyens 115 sont sous forme de deux doigts qui s'étendent selon un axe 226 sensiblement horizontal, parallèle à l'axe de l'alterno-démarreur 211. Dans le mode de réalisation représenté à la figure 3a, les doigts 115 sont alignés selon l'axe 226.

L'alterno-démarreur 211 comporte des plaques 216, disposées selon des plans verticaux sensiblement perpendiculaires à l'axe 212. Dans le mode de réalisation représenté à la figure 3a, les plaques 216 sont situées en partie supérieure de l'alterno-démarreur 211. Chaque plaque 216 est percée d'un orifice 217. Les plaques 216 et les orifices 217 sont disposés et configurés de sorte que les doigts 215 soient aptes à s'insérer simultanément, par translation du dispositif 213 selon l'axe 212, dans les orifices 217. Ainsi s'effectue l'assemblage de l'alterno-démarreur 211 et du dispositif 213.

Le dispositif 213 comporte un moyen 222 de blocage en translation dudit dispositif par rapport à l'alterno-démarreur 211 selon l'axe 212. Ce moyen consiste en un taquet 222 de forme coudée, monté en rotation sur le cadre 214 selon un axe vertical. En position fermée, telle que représentée sur la figure 3a, le taquet 222 vient au contact d'une plaque 216 de l'alterno-démarreur 211, ce qui forme une butée en translation selon l'axe 212. Cette butée prévient un désassemblage accidentel de l'alterno-démarreur 211 et du dispositif 213.

Lors des opérations d'assemblage et de désassemblage de l'ensemble 210, le taquet 222 est pivoté en une position dite ouverte, afin de ne pas gêner les translations de l'alterno-démarreur 211 et du dispositif 213 l'un par rapport à l'autre selon l'axe 212.

Dans les modes de réalisation précédemment décrits, les dispositifs manipulateurs comportent des doigts et les éléments à manipuler comportent des orifices complémentaires à ces doigts. D'autres moyens complémentaires, connus de l'état de la technique, sont également utilisables dans le cadre de l'invention. On peut notamment remplacer les plaques perforées des éléments à manipuler par des tôles recourbées, formant des gouttières pouvant reposer sur les doigts.

## Revendications

1. Ensemble (10, 110, 210) de manipulation comprenant :
- un élément (11, 111, 211) à manipuler, s'étendant selon un axe (12, 112, 212) sensiblement horizontal,
- un dispositif (13, 113, 213) manipulateur,
le dispositif manipulateur étant équipé de moyens (15, 115, 215) de saisie de l'élément à manipuler,
l'élément à manipuler étant équipé de moyens (17, 117, 217) complémentaires d'assemblage, aptes à coopérer avec les moyens de saisie du dispositif manipulateur,
lesdits moyens de saisie et lesdits moyens complémentaires étant configurés de sorte qu'un assemblage et/ou un désassemblage desdits moyens s'effectuent par translation du dispositif manipulateur par rapport à l'élément à manipuler, selon l'axe sensiblement horizontal dudit élément, et les moyens de saisie du dispositif manipulateur comportant au moins deux doigts (15, 115, 215), les moyens complémentaires d'assemblage de l'élément à manipuler comportant des faces (19) orientées vers le bas et de formes sensiblement complémentaires d'une forme d'une partie desdits doigts,
ledit ensemble étant **caractérisé en ce que** le dispositif manipulateur comporte des moyens (22, 122, 222) de blocage en translation sensiblement horizontale dudit dispositif manipulateur par rapport à l'élément à manipuler.

2. Ensemble selon la revendication 1, tel que le dispositif manipulateur comporte des moyens (21, 121) de guidage en translation sensiblement horizontale dudit dispositif manipulateur par rapport à l'élément à manipuler.

3. Ensemble selon la revendication 2, tel que les moyens de guidage comportent des patins (21, 121) constitués d'un matériau déformable élastiquement.

4. Ensemble selon l'une des revendications précédentes, tel que lesdits doigts sont aptes à s'insérer simultanément, par translation selon l'axe sensiblement horizontal de l'élément à manipuler, dans des orifices (17, 117, 217) portés par ledit élément, un bord (18) dudit orifice comportant une face (19) orientée vers le bas et de forme sensiblement complémentaire d'une partie dudit doigt.

5. Procédé de montage d'un véhicule, comportant les étapes suivantes :
- assemblage de moyens de saisie d'un dispositif manipulateur et de moyens complémentaires d'un élément à manipuler, ledit dispositif et ledit élément faisant partie d'un ensemble (10, 110, 210) de manipulation comprenant un élément (11, 111, 211) à manipuler, s'étendant selon un axe (12, 112, 212) sensiblement horizontal, un dispositif (13, 113, 213) manipulateur, le dispositif manipulateur étant équipé de moyens (15, 115, 215) de saisie de l'élément à manipuler, l'élément à manipuler étant équipé de moyens (17, 117, 217) complémentaires d'assemblage, aptes à coopérer avec les moyens de saisie du dispositif manipulateur, lesdits moyens de saisie et lesdits moyens complémentaires étant configurés de sorte qu'un assemblage et/ou un désassemblage desdits moyens s'effectuent par translation du dispositif manipulateur par rapport à l'élément à manipuler, selon l'axe sensiblement horizontal dudit élément, et les moyens de saisie du dispositif manipulateur comportant au moins deux doigts (15, 115, 215), les moyens complémentaires d'assemblage de l'élément à manipuler comportant des faces (19) orientées vers le bas et de formes sensiblement complémentaires d'une forme d'une partie desdits doigts,
- déplacement du dispositif manipulateur solidaire de l'élément à manipuler ;
- pose de l'élément à manipuler dans le véhicule par le dispositif manipulateur ;
- désassemblage des moyens de saisie du dispositif manipulateur et des moyens complémentaires de l'élément à manipuler ;
ledit procédé comprenant en outre :
- une étape d'activation d'un moyen (22, 122, 222) de blocage en translation horizontale du dispositif manipulateur par rapport à l'élément à manipuler ;
- une étape de désactivation dudit moyen de blocage.

## Patentansprüche

1. Manipulationsanordnung (10, 110, 210), die Folgendes umfasst:
- ein zu manipulierendes Element (11, 111, 211), das sich entlang einer Achse (12, 112, 212) erstreckt, die im Wesentlichen horizontal ist,
- eine Manipulationsvorrichtung (13, 113, 213), wobei die Manipulationsvorrichtung mit Mitteln (15, 115, 215) zum Erfassen des zu manipulierenden Elements ausgestattet ist,
wobei das zu manipulierende Element mit komplementären Zusammenfügemittel (17, 117, 217) ausgestattet ist, die geeignet sind, um mit den Erfassungsmitteln der Manipulationsanordnung zusammenzuwirken,
wobei die Erfassungsmittel und die komplementären Mittel derart ausgelegt sind, dass ein Zusammenbauen und/oder ein Auseinandernehmen der Mittel durch Verschiebung der Manipulationsanordnung in Bezug zu dem zu manipulierenden Element entlang einer Achse erfolgt, die im Wesentlichen zu dem Element horizontal ist, und wobei die Erfassungsmittel der Manipulationsanordnung mindestens zwei Finger (15, 115, 215) umfassen, wobei die komplementären Zusammenfügemittel des zu manipulierenden Elements Seiten (19) umfassen, die nach unten ausgerichtet sind und Formen hat, die im Wesentlichen zu einer Form eines Teils der Finger komplementär sind,
Anordnung **dadurch gekennzeichnet, dass** die Manipulationsanordnung Mittel (22, 122, 222) zum Blockieren in im Wesentlichen horizontaler Verschiebung der Manipulationsanordnung in Bezug zu dem zu manipulierenden Element umfasst.

2. Anordnung nach Anspruch 1, wobei die Manipulationsanordnung Mittel (21, 121) zum Führen in im Wesentlichen horizontaler Verschiebung der Manipulationsanordnung in Bezug zu dem zu manipulierenden Element umfasst.

3. Anordnung nach Anspruch 2, wobei die Führungsmittel Kufen (21, 121) umfassen, die aus einem elastisch verformbaren Werkstoff bestehen.

4. Anordnung nach einem der vorhergehenden Ansprüche, wobei die Finger geeignet sind, sich gleichzeitig durch Verschiebung entlang der im Wesentlichen horizontalen Achse des zu manipulierenden Elements in Öffnungen (17, 117, 217), die von dem Element getragen werden, einzufügen, wobei ein Rand (18) der Öffnung eine Seite (19) umfasst, die nach unten ausgerichtet ist und im Wesentlichen eine Form, die zu einem Teil des Fingers komplementär ist, hat.

5. Verfahren zur Montage eines Fahrzeugs, das die folgenden Schritte umfasst:
- Zusammenfügen von Erfassungsmitteln einer Manipulationsanordnung und komplementäre Mittel eines zu manipulierenden Elements, wobei die Anordnung und das Element Teil einer Manipulationsbaugruppe (10, 110, 210) sind, die ein zu manipulierendes Element (11, 111, 211) umfasst, das sich entlang einer im Wesentlichen horizontalen Achse (12, 112, 212) erstreckt, eine Manipulationsvorrichtung (13, 113, 213), wobei die Manipulationsvorrichtung mit Mitteln (15, 115, 215) zum Erfassen des zu manipulierenden Elements ausgestattet ist, wobei das zu manipulierende Element mit komplementären Zusammenfügemittel (17, 117, 217) ausgestattet ist, die geeignet sind, um mit den Erfassungsmitteln der Manipulationsvorrichtung zusammenzuwirken, wobei die Erfassungsmittel und die ergänzenden Mittel derart ausgelegt sind, dass ein Zusammenfügen und/oder Auseinandernehmen der Mittel durch Verschiebung der Manipulationsvorrichtung in Bezug zu dem zu manipulierenden Element entlang einer im Wesentlichen horizontalen Achse des Elements erfolgt, und wobei die Erfassungsmittel der Manipulationsvorrichtung mindestens zwei Finger (15, 115, 215) umfassen, wobei die komplementären Zusammenfügemittel des zu manipulierenden Elements Seiten (19) umfassen, die nach unten ausgerichtet sind und Formen haben, die im Wesentlichen zu einer Form eines Teils der Finger komplementär sind,
- Bewegen der Manipulationsvorrichtung, die fest mit dem zu manipulierenden Element verbunden ist,
- Ablegen des zu manipulierenden Elements in dem Fahrzeug durch die Manipulationsvorrichtung,
- Auseinandernehmen der Erfassungsmittel der Manipulationsvorrichtung und der komplementären Mittel des zu manipulierenden Elements,
wobei das Verfahren außerdem Folgendes umfasst:
- einen Aktivierungsschritt eines Mittels (22, 122, 222) zum Blockieren in horizontaler Verschiebung der Manipulationsvorrichtung in Bezug zu dem zu manipulierenden Element,
- einen Deaktivierungsschritt des Blockierungsmittels.

## Claims

1. A manipulation assembly (10, 110, 210) including:
- an element (11, 111, 211) that is to be manipulated, extending along a substantially horizontal axis (12, 112, 212),
- a manipulator device (13, 113, 213),
the manipulator device being equipped with means (15, 115, 215) for grasping the element that is to be manipulated,
the element that is to be manipulated being equipped with complementary assembly means (17, 117, 217) able to cooperate with the grasping means of the manipulator device,
said grasping means and said complementary means being configured such that an assembly and/or a disassembly of said means are carried out by translation of the manipulator device with respect to the element that is to be manipulated, along the substantially horizontal axis of said element, and the grasping means of the manipulator device comprising at least two fingers (15, 115, 215), the complementary assembly means of the element that is to be manipulated comprising faces (19) oriented downward and having shapes substantially complementary to a shape of a portion of said fingers,
said assembly being **characterized in that** the manipulator device comprises means (22, 122, 222) for blocking in substantially horizontal translation of said manipulator device with respect to the element that is to be manipulated.

2. The assembly according to claim 1, such that the manipulator device comprises means (21, 121) for guiding in substantially horizontal translation said manipulator device with respect to the element that is to be manipulated.

3. The assembly according to claim 2, such that the guiding means comprise pads (21, 121) constituted by an elastically deformable material.

4. The assembly according to one of the preceding claims, such that said fingers are able to insert themselves simultaneously, by translation along the substantially horizontal axis of the element that is to be manipulated, in orifices (17, 117, 217) carried by said element, an edge (18) of said orifice comprising a face (19) oriented downward and having a shaping substantially complementary to a portion of said finger.

5. An assembly method of a vehicle, comprising the following steps:
- assembly of grasping means of a manipulator device and of complementary means of an element that is to be manipulated, said device and said element forming part of a manipulation assembly (10, 110, 210) including an element (11, 111, 211) that is to be manipulated, extending along a substantially horizontal axis (12, 112, 212), a manipulator device (13, 113, 213), the manipulator device being equipped with grasping means (15, 115, 215) of the element that is to be manipulated, the element that is to be manipulated being equipped with complementary assembly means (17, 117, 217), able to cooperate with the grasping means of the manipulator device, said grasping means and said complementary means being configured such that an assembly and/or disassembly of said means are carried out by translation of the manipulator device with respect to the element that is to be manipulated, along the substantially horizontal axis of said element, and the grasping means of the manipulator device comprising at least two fingers (15, 115, 215), the complementary assembly means of the element that is to be manipulated comprising faces (19) oriented downward and having shapes substantially complementary to a shape of a portion of said fingers,
- displacement of the manipulator device integral with the element that is to be manipulated;
- placement of the element that is to be manipulated in the vehicle by the manipulator device;
- disassembly of the grasping means of the manipulator device and of the complementary means of the element that is to be manipulated;
said method further including:
- an activation step of a means (22, 122, 222) for blocking in horizontal translation of the manipulator device with respect to the element that is to be manipulated;
- a deactivation step of said blocking means.
